# EUROPEAN PATENT SPECIFICATION

(11) **EP 1 806 815 B1**
(45) Date of publication and mention of the grant of the patent: **03.04.2013**
(21) Application number: 07100086.3
(22) Date of filing: 04.01.2007
(51) Int. Cl.: H02B 1/06

(54) **A switchboard enclosure**
Ein Schaltschrankgehäuse
Enceinte de tableau

(30) Priority: 05.01.2006 IT TO20060002 U
(43) Date of publication of application: 11.07.2007
(73) Proprietor: SCHNEIDER ELECTRIC INDUSTRIES SAS, 92500 Rueil-Malmaison (FR)
(72) Inventor: Magno Giorgio, 24030, Brembate Sopra (Bergamo) (IT)
(74) Representative: Fioravanti, Corrado

(56) References cited:
- EP-A1- 0 620 623
- DE-U1- 20 108 784
- DE-U1- 20 202 553
- FR-A1- 2 858 479

## Description

This invention relates to a switchboard enclosure of the type defined in the preamble of claim 1. Such a switchboard enclosure is known, for example, from EP-A1-0 620 623.

Switchboard enclosures typically comprise a rear box to which is attached a front panel having a front aperture in which there are housed one or more modular plates having respective windows for access to the control buttons or levers of the electrical switches housed in the box.

The ends of the plates are usually screwed to the front panel. In order to access the internal parts of the casing, for example to install, remove or replace a switch, at least some plates must be unscrewed and removed and then reinstalled when work is finished.

FR-A1-2 858 479 discloses screws with portions projecting from their shanks to prevent their loss.

The object of the present invention is to provide a switchboard enclosure by means of which the plates may easily be removed with the minimum of wasted time.

This and other objects and advantages, which will be become clear from the following, are achieved in accordance with the present invention, by an enclosure having the features defined in the attached claims.

The features and advantages of the invention will become clear from the following detailed description of an embodiment which is given with reference to the appended drawings, provided purely by way of non-limiting example and in which:
- Figure 1 is a perspective view of a switchboard enclosure according to the present invention in an assembled state;
- Figure 2 is an exploded perspective view of two components of an enclosure according to the invention;
- Figures 3 and 4 are enlarged views which illustrate some details of the enclosure in Figure 1 in two different states; and
- Figure 5 is a section view of a component of the enclosure and the screws for fixing it to the remainder of the enclosure.

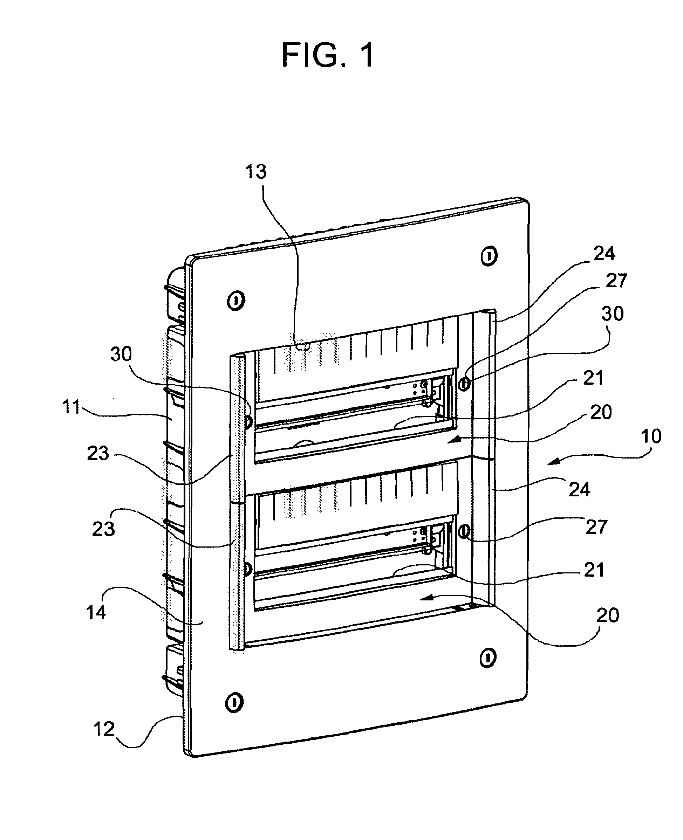

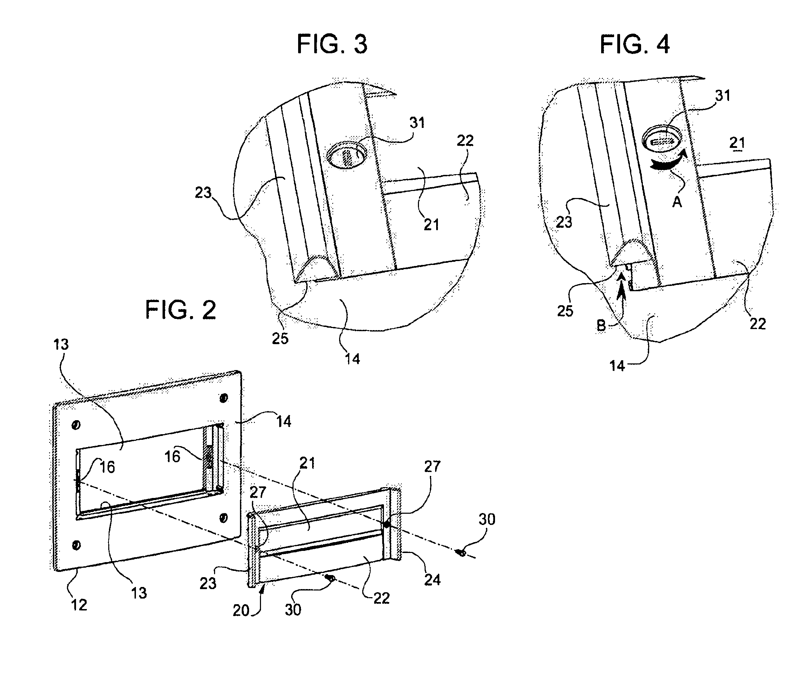

With reference initially to Figure 1, 10 indicates as a whole a switchboard enclosure according to the present invention. The enclosure 10 comprises a rear box 11 fitted with conventional mechanical mounting means and electrical connection means for a plurality of electrical switches (not illustrated). Attached to the box 11 is a cover or front panel 12 having a front aperture 13 in which are housed one or more modular plates 20 made of moulded plastics material. In the example in Figure 1, the enclosure has two plates 20; Figure 2 illustrates the example of a panel 12 associated with a single plate 20. The number of plates 20 may of course be greater than two, according to the layout of the switches and the size of the enclosure.

Each plate 20 comprises a main portion in the form of plate 22 having a respective window 21 for access to the control buttons or levers of the electrical switches (not illustrated) housed in the box 11 behind the plates 20. At the opposite lateral ends of the plates 20 a pair of manual grip portions 23, 24 is formed which, in the fitted position (Figures 1 and 3), rest on the front surface 14 of the front panel 12 by means of rear abutment surfaces 25, 26 and project forward from the panel 12.

The terms "front" and "rear" as used herein should be interpreted with reference to an observer facing a switchboard mounted on a vertical wall. The term "longitudinal" is used to indicate a direction perpendicular to the front surface 14 of the panel 12, while the term "transverse" indicates directions perpendicular to this longitudinal direction.

Close to the aperture 13 the front panel 12 forms, for each plate 20, a pair of threaded seats 16 suitable for receiving screws 30 to removably fix the plates 20 to the panel 12.

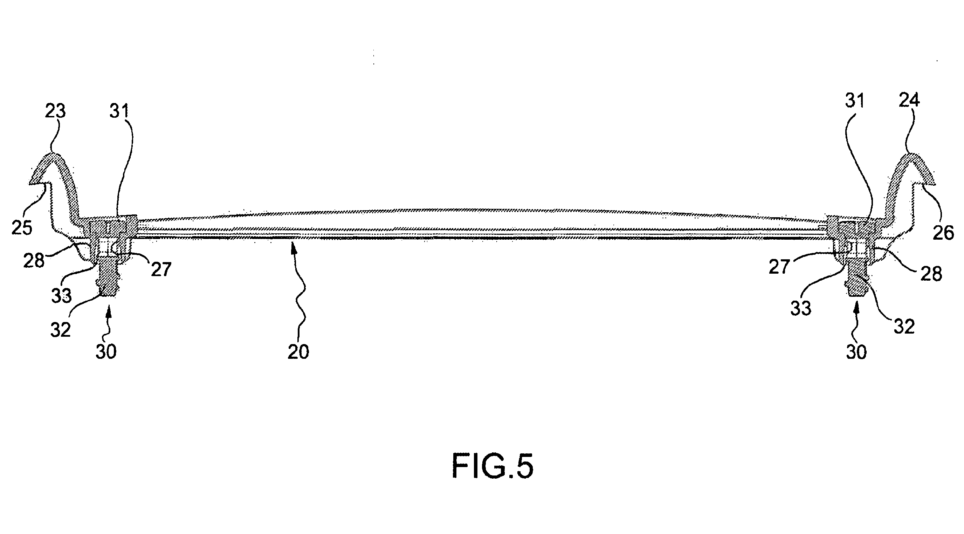

As better shown in Figure 5, each screw 30 has a head 31 and threaded shank 32 with a transversally projecting rib 33 longitudinally spaced apart from the head 31. Each screw 30 is snap-fitted into and longitudinally retained in a respective unthreaded through hole 27 formed in a peripheral zone of the plate 20 and having a diameter less than the diameters or transverse dimensions of the head 31 and the ribs 33 of the screw. On the rear side of the plate 20 tubular portions 28 are formed which project rearwardly and co-axially to the holes 27 to hold the screw shanks oriented parallel to the axes of the holes 27.

By virtue of this arrangement, the heads 31 of the screws, the holes 27 and the projecting ribs 33 constitute means of restraint which co-operate to retain the screws 30 longitudinally on the plate 20, leaving the screws free to rotate relative to the plate.

Because of this type of coupling, when it is necessary to remove a plate 20 fitted to the front panel 12 (Figures 1 and 3), the unscrewing of the screws (arrow A, Figure 4) causes the plate 20 to translate forwardly and away from the panel 12 (arrow B, Figure 4). The installer can easily grasp the plate by the manual grip portions 23, 24 and remove the plate from the rest of the enclosure. There is no risk that the screws 30, held onto the plate, will be lost, especially if the enclosure is left open for some time.

Preferably, the threaded coupling between the screws 30 and the related seats 16 formed by the front panel 12 comprises ribs having an inclination selected so that the screw can be fixed and removed by rotating it through a part of a turn, for example 90°.

It is understood that the invention is not limited to the embodiment described and illustrated here, which is to be considered as an example of the enclosure; the invention is open to modifications concerning the shape and layout of parts, construction details and materials used, as defined in the claims.

## Claims

1. A switchboard enclosure (10) comprising:
- a box-shaped body (11) for containing a plurality of electrical switches;
- a front panel (12) having a front aperture (13);
- at least one plate (20) with a window the plate being removably fixable in the aperture (13) of the front panel (12) and having a window (21) which allows operation of control buttons or levers of at least one of the electrical switches;
- at least two screws (30) each having a head (31), a threaded shank (32) and a portion (33) projecting transversely from the shank (32);
the shanks (32) of the screws being inserted in a longitudinal direction through corresponding holes (27) in the plate (20) and engaged in corresponding threaded seats (16) formed in the front panel (12),
**characterised in that**
- the shanks (32) of the screws have portions (33) projecting transversely therefrom,
- the holes (27) have sections, longitudinally intermediate between the heads (31) and the projecting portions (33), said sections having a transverse dimension less than the transverse dimensions of the heads (31) and the projecting portions (33),
- on the rear side of each plate (20) there are formed tubular portions (28) which project to the rear of and coaxially with the holes (27) to hold the shanks (32) of the screws oriented parallel to the axes of the holes (27), and wherein the holes (27) and the projecting portions (33) cooperate to retain the screws 30 longitudinally in the holes (27) in the plate and at the same time allow the screws (30) to rotate freely in said holes, whereby unscrewing (A) of the screws (30) causes translation (B) of the plate (20) away from the front panel (12).

2. An enclosure according to claim 1, **characterized in that** the projecting transversely portions (33) comprise in each screw (30) a rib (33) projecting transversely and longitudinally spaced apart from the head (31).

3. An enclosure according to claim 1, **characterized in that** each plate is provided with a pair of fastening means (30) with restraining means (31, 33, 27) at opposite ends of the plate.

4. An enclosure according to claim 1, **characterized in that** each plate (20) has at least one manual gripping means (23, 24) projecting forwards from the panel (12).

5. An enclosure according to claim 1, **characterized in that** each plate (20) has a pair of manual gripping portions (23, 24) located at opposite ends of the plate (20) and projecting forwards from the panel (12).

6. An enclosure according to claim 5, **characterized in that** each manual gripping portion (23, 24) has a respective rear abutment surface (25, 26) suitable for resting against a front surface (14) of the front panel (12).

## Patentansprüche

1. Schalttafelgehäuse (10), das aufweist:
- einen kastenförmigen Körper (11) zur Aufnahme mehrerer elektrischer Schalter;
- eine Frontplatte (12), die eine Frontöffnung (13) aufweist;
- wenigstens eine Platte (20) mit einem Fenster, wobei die Platte in der Öffnung (13) der Frontplatte (12) lösbar fixiert werden kann und ein Fenster (21) aufweist, das eine Betätigung von Steuerknöpfen oder -hebeln wenigstens eines der elektrischer Schalter ermöglicht;
- wenigstens zwei Schrauben (30), die jeweils einen Kopf (31), einen Gewindeschaft (32) und einen von dem Schaft (32) quer vorspringenden Abschnitt (33) aufweisen;
wobei die Schäfte (32) der Schrauben in eine Längsrichtung durch entsprechende Löcher (27) in der Platte (20) eingeführt sind und in entsprechende mit einem Gewinde versehene Sitze (16) eingreifen, die in der Frontplatte (12) ausgebildet sind,
**dadurch gekennzeichnet, dass**
- die Schäfte (32) der Schrauben von diesen quer vorspringende Abschnitte (33) aufweisen,
- die Löcher (27) Abschnitte aufweisen, die in Längsrichtung zwischen den Köpfen (31) und den vorspringenden Abschnitten (33) dazwischen liegen, wobei die Abschnitte eine Querabmessung aufweisen, die geringer ist als die Querabmessungen der Köpfe (31) und der vorspringenden Abschnitte (33),
- an der Rückseite jeder Platte (20) rohrförmige Abschnitte (28) ausgebildet sind, die nach hinten in Bezug auf die und koaxial zu den Löchern (27) vorragen, um die Schäfte (32) der Schrauben zu halten, die parallel zu den Achsen der Löcher (27) ausgerichtet sind, und wobei die Löcher (27) und die vorspringenden Abschnitte (33) zusammenwirken, um die Schrauben (30) in Längsrichtung in den Löchern (27) in der Platte zu halten und gleichzeitig den Schrauben (30) zu ermöglichen, sich in den Löchern frei zu drehen, wobei ein Lösen (A) der Schrauben (30) eine Verschiebung (B) der Platte (20) von der Frontplatte (12) weg bewirkt.

2. Gehäuse nach Anspruch 1, **dadurch gekennzeichnet, dass** die quer vorspringenden Abschnitte (33) an jeder Schraube (30) eine Rippe (33) aufweisen, die in Querrichtung vorsteht und in Längsrichtung von dem Kopf (31) beabstandet ist.

3. Gehäuse nach Anspruch 1, **dadurch gekennzeichnet, dass** jede Platte mit einem Paar von Befestigungsmitteln (30) mit Rückhaltemitteln (31, 33, 27) an gegenüberliegenden Enden der Platte versehen ist.

4. Gehäuse nach Anspruch 1, **dadurch gekennzeichnet, dass** jede Platte (20) wenigstens ein Handgriffmittel (23, 24) aufweist, das von der Frontplatte (12) nach vorne vorsteht.

5. Gehäuse nach Anspruch 1, **dadurch gekennzeichnet, dass** jede Platte (20) ein Paar von Handgriffabschnitten (23, 24) aufweist, die an gegenüberliegenden Enden der Platte (20) angeordnet sind und von der Frontplatte (12) nach vorne vorstehen.

6. Gehäuse nach Anspruch 5, **dadurch gekennzeichnet, dass** jeder Handgriffabschnitt (23, 24) eine jeweilige rückseitige Anlagefläche (25, 26) aufweist, die zur Anlage gegen eine Vorderfläche (14) der Frontplatte (12) geeignet ist.

## Revendications

1. Enceinte de tableau (10) comprenant :
- un corps en forme de boîte (11) pour contenir une pluralité d'interrupteurs électriques ;
- un panneau avant (12) ayant une ouverture avant (13) ;
- au moins une plaque (20) avec une fenêtre, la plaque pouvant être fixée de manière amovible dans l'ouverture (13) du panneau avant (12) et ayant une fenêtre (21) qui permet d'actionner des boutons ou des leviers de commande d'au moins l'un des interrupteurs électriques ;
- au moins deux vis (30) ayant chacune une tête (31), une tige filetée (32) et une partie (33) faisant saillie transversalement de la tige (32) ;
les tiges (32) des vis étant insérées dans une direction longitudinale à travers des trous (27) correspondants dans la plaque (20) et mises en prise dans des sièges filetés (16) correspondants formés dans le panneau avant (12),
**caractérisée en ce que**
- les tiges (32) des vis ont des parties (33) faisant saillie transversalement à partir de ces dernières,
- les trous (27) ont des sections longitudinalement intermédiaires entre les têtes (31) et les parties en saillie (33), lesdites sections ayant une dimension transversale inférieure aux dimensions transversales des têtes (31) et des parties en saillie (33),
- sur le côté arrière de chaque plaque (20), on forme des parties tubulaires (28) qui font saillie de l'arrière de et de manière coaxiale avec les trous (27) pour maintenir les tiges (32) des vis orientées parallèlement aux axes des trous (27), et dans laquelle les trous (27) et les parties en saillie (33) coopèrent pour retenir les vis (30) longitudinalement dans les trous (27) dans la plaque et permettre en même temps aux vis (30) de tourner librement dans lesdits trous, moyennant quoi le dévissage (A) des vis (30) provoque la translation (B) des plaques (20) à distance du panneau avant (12).

2. Enceinte selon la revendication 1, **caractérisée en ce que** les parties transversalement en saillie (33) comprennent dans chaque vis (30), une nervure (33) faisant saillie transversalement et longitudinalement espacée de la tête (31).

3. Enceinte selon la revendication 1, **caractérisée en ce que** chaque plaque est prévue avec une paire de moyens de fixation (30) avec des moyens de retenue (31, 33, 27) sur les extrémités opposées de la plaque.

4. Enceinte selon la revendication 1, **caractérisée en ce que** chaque plaque (20) a au moins des moyens de prise manuelle (23, 24) faisant saillie vers l'avant à partir du panneau (12).

5. Enceinte selon la revendication 1, **caractérisée en ce que** chaque plaque (20) a une paire de parties de prise manuelle (23, 24) positionnées aux extrémités opposées de la plaque (20) et faisant saillie vers l'avant à partir du panneau (12).

6. Enceinte selon la revendication 5, **caractérisée en ce que** chaque partie de prise manuelle (23, 24) a une surface de butée arrière (25, 26) respective appropriée pour s'appuyer contre une surface avant (14) du panneau avant (12).
